# EUROPÄISCHE PATENTANMELDUNG

(11) **EP 1 985 874 A2**
(43) Veröffentlichungstag der Anmeldung: **29.10.2008**
(21) Anmeldenummer: 08006777.0
(22) Anmeldetag: 03.04.2008
(51) Int. Cl.: F16C 19/54, F16C 23/08

(54) **Lagervorrichtung**

(30) Priorität: 26.04.2007 DE 102007019667
(71) Anmelder: Pfeiffer Vacuum GmbH, 35614 Asslar (DE)
(72) Erfinder: Mekota, Mirko, 35630 Ehringshausen (DE); Eilers, Martin, 35614 Asslar (DE)

(57) **Zusammenfassung**

Die Erfindung betrifft eine Lagervorrichtung zur drehbaren Unterstützung eines Rotors (1), welche einen mit dem Rotor fest verbundenen Lagerrotor (2) und einen Lagerstator (3) aufweist, mit einem Gehäuseteil (4a, 4b), wobei der Lagerstator fest mit einem Koppelelement (5) verbunden ist und sich dieses beweglich am Gehäuseteil abstützt. Zur Verbesserung der Schwingungseigenschaften wird vorgeschlagen, dass Gehäuseteil und Koppelement jeweils wenigstens eine ebene Fläche aufweisen und diese Flächen parallel zueinander angeordnet sind.

## Beschreibung

Die Erfindung betrifft eine Lagervorrichtung nach dem Oberbegriff des ersten Anspruchs.

In vielen Systemen sind schnelldrehende Rotoren drehbar zu lagern. Inbesondere sind solche Rotoren in Vakuumpumpen anzutreffen, die auf dem Prinzip der Gasreibung beruhen. In diesen Systemen treten mechanische Schwingungen auf und erzeugen Probleme. Zum einen sind diese Schwingungen pumpeninduziert, z.B. durch die Anregung von Eigenfrequenzen, welche die Lager und die Rotoren besitzen. Insbesondere bei Veränderungen der Drehgeschwindigkeit des Rotors werden diese Eigenfrequenzen durch unvermeidbare Unwuchten des Rotors angeregt. Zum anderen werden solche Pumpen aufgrund ihrer Umgebungs- und Montagebedingungen Schwingungen ausgesetzt, die vom Rotorsystem ferngehalten werden sollen. Im Kern ist daher die Entkopplung des Gehäuses vom Rotor zur Unterdrückung des Schwingungstransfers eine Fragestellung.

Die EP-A 0 867 627 betrifft ein Dämpfungssystem für magnetisch gelagerte Rotoren und schlägt vor, zwischen Rotor und Gehäuse ein Zwischenglied vorzusehen, welches sich über Kugeln im Gehäuse abstützt. Diese Kugeln ruhen in Kalotten. Nachteilig an dieser Lösung ist, dass unabhängig vom verwendeten Material und Kalottenradius selbst bei geringsten Auslenkung der Kugeln enorme Rückstellkräfte entstehen. Ein Grund dafür ist, dass die Wahl des Kugel- und Kalottenmaterials durch die sonstigen in der Pumpe wirkenden Kräfte eingeschränkt wird, beispielsweise durch die Gewichtskraft des Rotors oder die entlang der Rotorachse wirkenden Lagerkräfte in Permanentmagnetlagern. Letztlich ist festzustellen, dass die gewünschte Funktion nicht erreicht wird.

Es ist daher Aufgabe der Erfindung, eine Lagervorrichtung vorzustellen, die die Schwingungsverträglichkeit erhöht und dabei den auf den Rotor wirkenden Kräften Rechnung trägt.

Gelöst wird diese Aufgabe durch eine Lagervorrichtung mit den Merkmalen des ersten Anspruchs. Die Merkmale der Ansprüche 2 bis 12 stellen vorteilhafte Weiterbildungen der Erfindung dar.

Erfindungsgemäß sind an Gehäuseteil und Koppelelement ebene Flächen angeordnet, die parallel zueinander sind und sich gegenüberstehen. Dabei sind sie so angeordnet, dass das Koppelelement in Richtung der Rotorachse starr und senkrecht dazu mit geringer Steifigkeit gehaltert ist. Hierdurch wird erreicht, dass der Rotor in Richtung senkrecht zu seiner Achse frei schwingen kann, während in axialer Richtung keine Auslenkungen erfolgen. Dadurch ist ein sehr hohe Verträglichkeit für axiale Kraftkomponenten gegeben, die beispielsweise durch das Rotorgewicht, durch Lagerkräfte oder durch beim Flutvorgang auftretende Strömungskräfte entstehen.

Im einfachsten Fall sind die ebenen Flächen Teile eines Gleitlagers. Die Flächen gleiten aufeinander und die Reibung zwischen ihnen sorgt gleichzeitig für eine Dämpfung der Bewegung. Diese Reibung lässt sich durch geeignete Wahl der Materialpaarung einstellen. Auch ist es denkbar eine oder mehrere der Flächen zu beschichten und hiermit die Reibung zu beeinflussen.

In einer anderen Weiterbildung ist zwischen den Flächen eine Kugel angeordnet. Dies reduziert die Reibung und verringert die Anforderungen an die Oberflächen.

Eine vorteilhafte Weiterbildung ist, zwei Lagen von Kugeln vorzusehen, wobei die Kugeln jeder Lage zwischen parallelen ebenen Flächen an Gehäuseteil und Koppelelement angeordnet sind. Hierdurch ist ein symmetrischer Aufbau gegeben, der Kraftwirkungen in entgegengesetzten Richtungen, beispielsweise in beide Richtungen der Rotorachse, besser begegnen kann.

Ordnet man die Lagen so an, dass die Ebenen der Kugelmittelpunkte weniger als einen Kugeldurchmesser voneinander beabstandet sind, ist ein räumlich sehr kompakter Aufbau möglich.

In einer günstigen Weiterbildung ist ein Dämpfungselement zwischen Koppelelement und Gehäuseteil angeordnet. Hierdurch wird auf eine einfache Weise eine Dämpfung der Bewegung und Zentrierung des Koppelelements bezüglich des Gehäuseteils erreicht.

In einer Ausführungsform umfasst dieses Dämpfungselement elastomeres Material, welches auf Scherung oder auf Druck beansprucht wird. Hier ist eine weite Bandbreite von Materialien und damit unterschiedlichen Dämpfungseigenschaften erhältlich, so dass die Lagervorrichtung sehr spezifisch eingestellt werden kann.

In einer anderen Weiterbildung ist das Dämpfungselement derart durch Formgebung oder Materialwahl beschaffen, dass es eine progressive Federkennlinie aufweist. Dies bedeutet, dass bei zunehmender Auslenkung des Rotors aus der Nulllage eine überproportional zunehmende Rückstellung in die Nulllage erzielt wird. Die Rückstellkräfte sind daher nur bei großen Auslenkungen stark, bei kleinen Auslenkungen bleiben sie gering, so dass die Schwingungsübertragung zwischen Rotor und Gehäuse ebenfalls gering bleibt.

Eine vorteilhafte Weiterbildung bezieht sich auf die Art des Lagers, welches in dem Koppelelement gehaltert ist. Enthalten Lagerrotor und Lagerstator Permanentmagnete, bilden sie ein sogenanntes Permanentmagnetlager. Solche Lager erzeugen bei kleinster axialer Auslenkung aus der Ruhelage Kräfte in axialer Richtung, so dass die hohe axiale Steifigkeit der Lagervorrichtung besonders vorteilhaft zur Geltung kommt.

In einer anderen Weiterbildung sind Lagerrotor und Lagerstator je ein Ring eines Wälzlagers. Wälzlager übertragen Schwingungen sehr direkt, zudem wirken sich diese auf den Verschleiß der Lager aus. Die Eigenschaften der Lagervorrichtung kommen daher hier gut zur Geltung.
In einer anderen Weiterbildung ist ein Anschlag vorgesehen, der die Bewegung in zu den Flächen paralleler Richtung begrenzt. Hierdurch ist es sehr einfach möglich, den Kontakt von rotierenden und stehenden Bauteilen zu verhindern, der zu einer unkontrollierten Freisetzung der teils enormen Rotationsenergie führen würde. Die rotierenden Bauteile können hierbei der Lagerrotor oder im Falle einer Turbomolekularpumpe deren rotorseitigen Schaufelräder sein.

Die Eigenschaften der Lagervorrichtung kommen in einer Vakuumpumpe besonders zur Geltung, da in diesen und inbesondere in deren Hochvakuumbereich, hohe Anforderungen an chemische Beständigkeit und Vermeidung von ausgasenden Materialien gegeben sind. Diese Anforderungen sind mit der vorgestellten Lagervorrichtung besonders einfach einzuhalten.

Anhand von Ausführungsbeispielen soll die Erfindung näher erläutert werden. Es zeigen:
- Fig. 1:: Achsschnitt durch ein erstes Ausführungsbeispiel
- Fig. 2:: Achsschnitt durch ein zweite Ausführungsbeispiel
- Fig. 3:: Achsschnitt durch eine Weiterbildung des zweiten Ausführungsbeispiels.

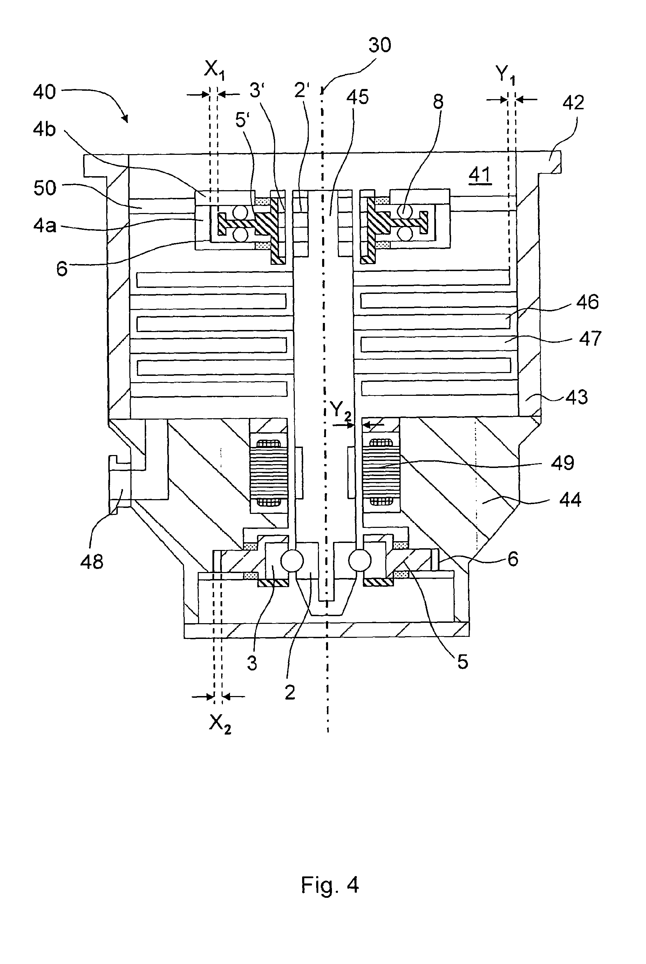

- Fig. 4:: Schnitt durch eine Turbomolekularvakuumpumpe, welche erfindungsgemäße Lagervorrichtungen aufweist.

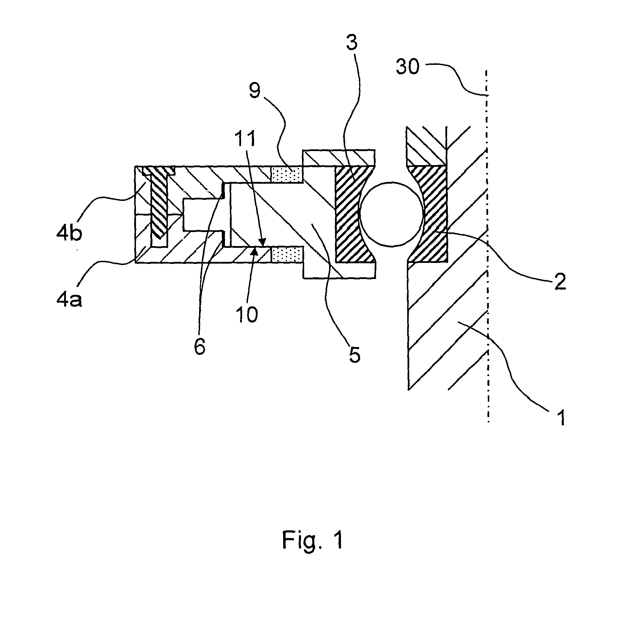

Ein erstes Ausführungsbeispiel der Lagervorrichtung zeigt Abbildung 1. Auf einem Rotor 1, der eine Rotorachse 30 definiert, ist ein Lagerrotor 2 angeordnet. In diesem Beispiel ist er als Innenring eines Kugellagers ausgebildet. Ein zweiteiliges Gehäuseteil 4a, 4b dient zur Stützung des Rotors. Zwischen dem Gehäuseteil und dem Rotor ist ein Koppelelement 5 angeordnet, welches mit einem Lagerstator 3 verbunden ist. In diesem Beispiel ist er als Außenring eines Kugellagers gestaltet. Zwischen dem Koppelelement und dem Gehäuseteil ist ein Dämpfungselement 9 vorgesehen, welches die Bewegung des Koppelelements senkrecht zur Rotorachse dämpft und gleichzeitig das Koppelelement im Gehäuseteil zentriert. Diese Dämpfungselement ist auf Druck beansprucht. Es kann als Elastomerteil mit rundem Querschnitt, insbesondere als Rundschnurring, ausgeführt werden, was zu einer vorteilhaften progressiven Federkennlinie der Rückstellkraft führt. Alternativ kann die Auflagefläche eines Elastomerrings mit rechteckigem Querschnitt gekrümmt geformt sein. Auf beide Arten wird gewährleistet, dass die Berührungszone zwischen Auflagefläche und Ring bei Verformung zunimmt und so die progressive Kennlinie bewirkt wird. Elastomere besitzen zudem die vorteilhafte Eigenschaft bei zunehmend hohen Frequenzen härter zu werden. Sie beeinflussen das Schwingungsverhalten daher nur in dem gewünschten Bereich niedriger Frequenzen, insbesondere der Magnetlagereigenfrequenz. Gehäuseteil und Koppelelement weisen ebene parallele Flächen 10 und 11 auf, die sich gegenüberstehen. In diesem Beispiel sind sie in berührendem Kontakt, wobei sie in einer Richtung senkrecht zur Rotorachse, d.h. radial, aufeinander gleiten können. Für dieses Gleitlager ist eine geeignete Materialpaarung für die Bauteile 4a, 4b und 5 zu wählen oder die ebenen Flächen 10 und 11 geeignet zu beschichten. Denkbar sind hier beispielsweise Polytetrafluorethylen enthaltende Beschichtungen. Die gleitende Bewegung wird durch einen Anschlag 6 begrenzt. Diese ist durch Flächen verwirklicht, die sich parallal zur Rotorachse erstrecken. Durch Parallelität der Flächen 10 und 11 und spielfreien Zusammenbau ergibt sich eine hohe Kippsteifigkeit, d.h. das Koppelelement kann nicht gegenüber der Flächennormalen der Flächen 10 und 11 verkippen.

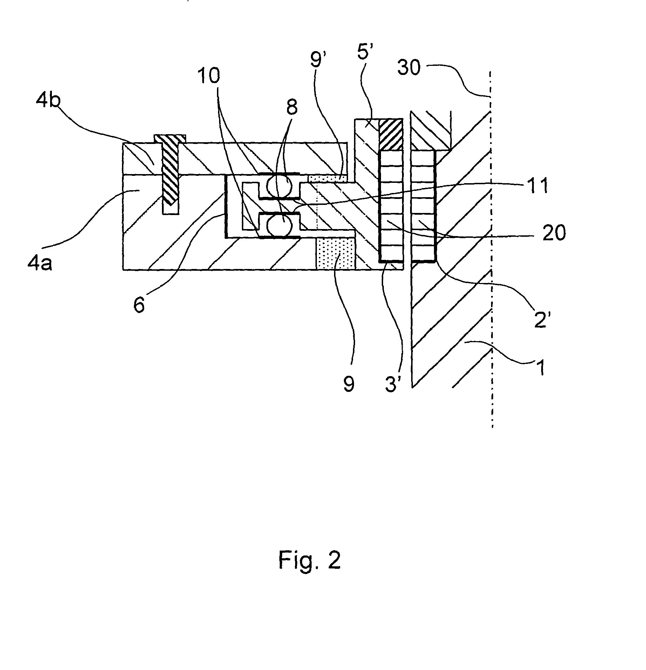

Ein zweites Ausführungsbeispiel ist in Abbildung 2 gezeigt. Auf dem Rotor 1 und dem Koppelelement 5' sind Dauermagnete 20 vorgesehen. Die Gesamtheit der Dauermagnete am Rotor bildet dabei den Lagerrotor 2', diejenige Gesamtheit am Koppelelement den Lagerstator 3', wobei zwischen den Dauermagneten noch Distanzscheiben und dergleichen angeordnet sein können. Lagerrotor 2' und Lagerstator 3' bilden auf diese Weise ein Magnetlager permanentmagnetischer Bauart. Ein zweiteiliges Gehäuseteil 4a, 4b weist einen Anschlag 6 auf, der auch hier die radiale Bewegung des Koppelelements 5' begrenzt. Die Gehäuseteile 4a und 4b können dabei wie gezeigt durch Schrauben miteinander verbunden sein. Denkbar ist aber auch eine Verbindung durch Löten, Laserschweißen, Kleben und dergleichen. Koppelelement und Gehäuseteil weisen parallele ebene Flächen 10 und 11 auf, zwischen denen in diesem Beispiel eine Kugel 8 angeordnet ist. Diese Kugel sorgt bei nahezu unendlich großer axialer Steifigkeit für eine verschwindend geringe Reibung, die der radialen Bewegung des Koppelelements entgegensteht. Werden je drei Kugeln zwischen jedem der Flächenpaare 10 und 11 angeordnet, wird eine optimale Bestimmtheit erreicht. Dies bedeutet, dass eine spielfreie Montage möglich ist und in der Summe eine hohe Steifigkeit der Anordnung gegen Kippbewegungen des Koppelelements in Bezug zum Gehäuse erreicht wird. Die Radialbewegung wird durch Dämpfungselemente gedämpft. Außerdem wird durch diese dämpfenden Elemente eine Zentrierung des Koppelements im Gehäuseteil erreicht. Das erste Dämpfungselement 9 ist auf Druck beansprucht, während das zweite 9' auf Scherung beansprucht wird. Bei einem auf Scherung beanspruchten Dämpfungselement kann eine progressive Federkennlinie beispielsweise durch eine inhomogenes Material oder ein Laminat aus mehreren Schichten mit verschiedenen Verformungseigenschaften erreicht werden. Die radiale Steifigkeit der Lagerung des Koppelelements im Gehäuseteil ist durch die Abstützung auf Kugeln sehr viel kleiner als die des Magnetlagers. Gleichzeitig ist die axiale Steifigkeit sehr viel größer als die des Magnetlagers. Dies sichert eine optimale Anordnung von Lagerstator und Lagerrotor zu einander, so dass eine optimale Funktion des Lagers auch unter der Einwirkung axialer Kräfte auf den Rotor gewährleistet ist. Die ebenen Flächen 10 und 11 sind senkrecht zur Rotorachse gezeichnet, können aber auch zu dieser geneigt sein. Um die Überlagerung von radialer und axialer Bewegung gering zu halten, wird dieser Winkel nicht zu groß gewählt.

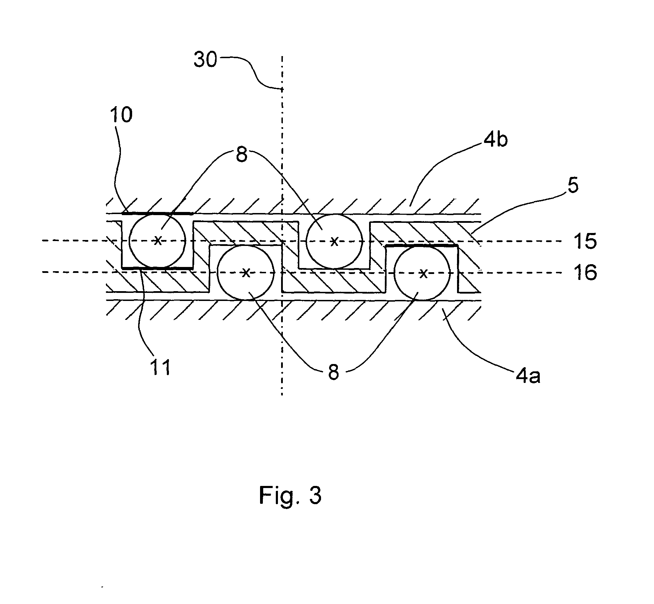

Eine Weiterbildung dieses Ausführungsbeispiels ist in Abbildung 3 gezeigt. Diese Darstellung ist eine Abwicklung von Koppelelement und Gehäuseteil im gleichen Abstand zur Rotorachse wie der der Kugeln. Zwei Lagen von Kugeln 8 sind hier vorgesehen, wobei jede Kugel in einem Topf sitzt, der ihre Bewegung entlang des Umfangs und des Radius' begrenzt. In axialer Richtung ruhen die Kugeln auf zueinander parallelen ebenen Flächen. Die ebenen Flächen 10 sind am Gehäuseteil 4a, 4b, vorgesehen. Die ebenen Flächen 11 am Koppelelement bilden die gegenüberliegenden Stirnflächen des Topfes. Jede Lage von Kugeln hat eine Ebene der Kugelmittelpunkte, wobei die Ebene 15 der ersten Lage und die Ebene 16 der zweiten Lage weniger als ein Kugeldurchmesser voneinander beabstandet sind.

Die vierte Abbildung zeigt eine Turbomolekularvakuumpumpe 40. Sie weist an ihrem hochvakuumseitigen Ende einen Gaseinlass 41 auf, der über einen Flansch 42 mit einem nicht dargestellten Rezipienten lösbar verbunden ist. Die Turbomolekularvakuumpumpe weist weiterhin ein oberes Gehäuseteil 43 und eine unteres Gehäuseteil 44 auf. Eine Welle 45 trägt mit Schaufeln versehene Rotorscheiben 46. Stehende Schaufeln sind auf den Statorscheiben 47 angeordnet, die sich mit den Rotorscheiben in axialer Richtung abwechseln. Der aus Welle und Rotorscheiben aufgebaute Rotor wird durch einen Antrieb 49 in schnelle Drehung versetzt. Das verdichtete Gas wird über einen Gasauslass 48 ausgestoßen.

Ein Träger 50 ist mit der der Rotorachse zugewandten Innenseite des oberen Gehäuseteils 43 und mit den Gehäuseteilen 4a, 4b der Lagervorrichtung verbunden. Eine vorteilhafte Weiterbildung ist es, oberes Gehäuseteil, Träger und wenigenstens eines der Gehäuseteile 4a, 4b der Lagervorrichtung einstückig auszuführen. Der Träger ist derart gestaltet, dass ein Gasfluss zwischen Gaseinlass 41 und Rotorscheibe 46 möglich ist.

Das dem Gaseinlass abgewandte Ende der Welle wird durch eine mit Kugellager ausgerüstete Lagervorrichtung unterstützt. Diese Lagervorrichtung entspricht derjenigen des ersten Ausführungsbeispiels, wobei anstelle eines Gehäuseteils 4b das untere Gehäuseteil 44 der Turbomolekularvakuumpumpe so ausgebildet ist, dass es zusammen mit dem Koppelelement 5 ein Gleitlager bildet.

Das Lager, welches sich am dem Gaseinlass zugewandten Ende der Welle befindet, ist durch eine Lagervorrichtung nach dem zweiten Ausführungsbeispiel drehbar unterstützt. Auf der Welle 45 ist der mit Permanentmagneten gestaltete Lagerrotor 2' angeordnet. Diesem gegenüber steht der ebenfalls mit Permanentmagneten gestaltete Lagerstator 3', welcher mit dem Koppelelement 5' verbunden ist.

Die vierte Abbildung zeigt einen Vorteil des Anschlags 6 der Lagervorrichtungen nach den Abbildungen 1 und 2. Bei Nichtauslenkung des Rotors aus seiner zentrischen Position hat der Abstand zwischen Koppelelement und Anschlag in der oberen Lagervorrichtung das Maß X₁, in der unteren Lagervorrichtung das Maß X₂. Zwischen Welle 45 und unterem Gehäuse 44 beträgt das Spaltmaß Y₂. Zwischen Rotorscheibe 46 und oberem Gehäuse 43 beträgt das Spaltmaß Y₁. Durch den Anschlag 6 wird eine Begrenzung der Auslenkung des Koppelelements in radialer Richtung bewirkt. Die Lagervorrichtungen sind vorteilhaft so gestaltet, dass die Maße X₁ und X₂ eine maximale radiale Auslenkung des Rotors erlauben, bei der Rotorscheiben und Rotorwelle die Gehäuseteile 43 und 44 nicht berühren. Erreicht werden kann dies, indem die Spaltmaße X₁ und X₂ kleiner sind als die Spaltmaße Y₁ und Y₂.

Die in der vierten Abbildung gezeigte, gemeinsame Anordnung der Lagervorrichtungen in der Turbomolekularvakuumpumpe ist vorteilhaft, da die durch die Permanentmagneten erzeugten axialen Kräfte durch die Wirkweise der Lagervorrichtungen aufgefangen werden und gleichzeitig die radiale Bewegungsfreiheit einen sehr vibrationsarmen Lauf bewirkt. Erschütterungen von außen wirken sich nicht mehr direkt, sondern isoliert und gedämpft durch die Vorrichtungen auf den Rotor aus. Dies ermöglicht deutlich größere externe Anregungen, bevor es zu einem Fanglagerkontakt oder Anlaufen des Rotors kommt.

## Patentansprüche

1. Lagervorrichtung zur drehbaren Unterstützung eines Rotors (1), welche einen mit dem Rotor verbundenen Lagerrotor (2; 2') und einen Lagerstator (3; 3') aufweist, mit einem Gehäuseteil (4a, 4b), wobei der Lagerstator mit einem Koppelelement (5; 5') verbunden ist und sich dieses beweglich am Gehäuseteil abstützt, **dadurch gekennzeichnet, dass** Gehäuseteil und Koppelelement jeweils wenigstens eine ebene Fläche (10, 11) aufweisen und diese Flächen parallel zueinander und sich gegenüberstehend angeordnet sind.

2. Lagervorrichtung nach Anspruch 1, **dadurch gekennzeichnet, dass** die ebenen Flächen (10, 11) Teile eines Gleitlagers sind.

3. Lagervorrichtung nach Anspruch 1, **dadurch gekennzeichnet, dass** zwischen den ebenen Flächen (10, 11) eine Kugel (8) angeordnet ist.

4. Lagervorrichtung nach Anspruch 3, **dadurch gekennzeichnet, dass** eine Mehrzahl von Kugeln (8) in zwei Lagen angeordnet ist, wobei die Lagen zur Abstützung in entgegengesetzte Richtungen dienen.

5. Lagervorrichtung nach Anspruch 4, **dadurch gekennzeichnet, dass** die Ebenen (15, 16) der Kugelmittelpunkte beider Lagen weniger als einen Kugeldurchmesser voneinander beabstandet sind.

6. Lagervorrichtung nach einem der vorhergehenden Ansprüche, **dadurch gekennzeichnet, dass** zwischen Koppelelement (5; 5') und Gehäuseteil (4a, 4b) wenigstens ein Dämpfungselement (9) zum Zentrieren des Koppelements (5) im Gehäuseteil (4a, 4b) und zur Dämpfung der Bewegung in der zu den Flächen (10, 11) parallelen Richtung angeordnet ist.

7. Lagervorrichtung nach Anspruch 6, **dadurch gekennzeichnet, dass** das Dämpfungselement (9) ein elastomeres Material umfasst.

8. Lagervorrichtung nach Anspruch 6 oder 7, **dadurch gekennzeichnet, dass** das Dämpfungselement derart beschaffen ist, dass es eine progressive Federkennlinie aufweist.

9. Lagervorrichtung nach einem der vorhergehenden Ansprüche, **dadurch gekennzeichnet, dass** Lagerrotor (2') und Lagerstator (3') Permanentmagnete (20) enthalten und eine magnetische Lagervorrichtung bilden.

10. Lagervorrichtung nach einem der vorhergehenden Ansprüche, **dadurch gekennzeichnet, dass** Lagerrotor (2) und Lagerstator (3) je einen Ring eines Wälzlagers umfassen.

11. Lagervorrichtung nach einem der vorhergehenden Ansprüche, **dadurch gekennzeichnet, dass** ein Anschlag (6) die Bewegung in zu den Flächen paralleler Richtung begrenzt.

12. Lagervorrichtung nach einem der vorhergehenden Ansprüche, **dadurch gekennzeichnet, dass** sie derart in einer Turbomolekularvakuumpumpe (40) angeordnet ist, dass sie ein Ende einer Welle (45) drehbar unterstützt.
